# EUROPEAN PATENT SPECIFICATION

(11) **EP 4 357 238 B1**
(45) Date of publication and mention of the grant of the patent: **24.06.2026**
(21) Application number: 22202507.4
(22) Date of filing: 19.10.2022
(51) Int. Cl.: B64C 1/10, B64D 11/00, E05B 17/00, E05C 17/56

(54) **RETAINERS**
HALTERUNGEN
DISPOSITIFS DE RETENUE

(43) Date of publication of application: 24.04.2024
(73) Proprietor: B/E Aerospace (UK) Limited, Leighton Buzzard, Bedfordshire LU7 4TB (GB)
(72) Inventor: Chylinski, Rafal H, Leighton Buzzard, LU7 4TB (GB); Griffiths, Peter A, Leighton Buzzard, LU7 4TB (GB); Wall, Daniel H, Leighton Buzzard, LU7 4TB (GB)
(74) Representative: Dehns

(56) References cited:
- EP-A2- 1 662 083
- DE-A1- 102004 032 149
- DE-A1- 2 433 131
- FR-A1- 2 267 439
- US-A1- 2017 275 934
- US-A1- 2021 282 607

## Description

This disclosure relates to retainers and in particular retainers for use on aircraft for use in retaining a mobile structural element of the aircraft in a desired position.

In many parts of an aircraft there are mobile structural elements such as doors, steps, or sets of steps which are attached to another mobile structural element or a fixed position structural element of the aircraft, for example a bulkhead, by one or more hinges or other pivots. Those mobile structural elements are moveable between first and second positions relative to the structural element to which it is attached. It is desirable for the mobile structural element to be retained in at least one of the first or second position once it has been moved to that position. For example, the first and second positions are open and closed for doors, or deployed or folded away for a step or a set of steps. It is to be understood that as used herein use of the terms mobile, movable, fixed and similar terms are terms that are relative to the structure of the aircraft as a whole.

FR 2267439 A1 discloses a device which has a co-axial sliding arrangement which includes an inner magnetic rod, an intermediate tube, and an outer tube. The rod and intermediate tube project from the outer tube and retract under pressure from a door against a pair of coil springs to effect retraction of the rod and magnetic engagement of a door mounted disc and absorption of the impact of the door.

According to a first aspect of the present disclosure there is provided a retainer suitable for use on an aircraft, the retainer comprising the features of claim 1.

Shock impulses may also described as shock waves. The shock impulse may originate from an impact between the mobile structural element and the structural element to which the mobile structural element is attached.

A magnetic element is, for the purposes of the present disclosure, one that generates a magnetic field of sufficient strength for the retainer to function, or one that exposure to a magnetic field causes that element to become magnetised with a magnetic field of sufficient strength for the retainer to function. A retainer is considered to function if it successfully retains the mobile structural element in position in the normal use of the aircraft.

The first and second retainer parts are magnetically attractive to each other when sufficiently close to each other for any magnetic field generated by an element of one or both of the first and second retainer parts to interact with the other.

The damping of the shock impulses by the damping material may lead to the complete absorption of the shock impulse or to attenuate or lessen the magnitude of the shock impulse.

One of the first and second retainer parts is, in use, attached to the mobile structural element, and the other attached to the structural element to which the mobile structural element is attached or other fixed structural element.

An advantage of the damper supporting the catch and being formed of a material that damps shock impulses in that any shock impulses created by an impact between a structural element and the first retainer part will not be propagated through the damper and into the structural element to which the first retainer part is attached, or any transmitted shock impulse will be significantly attenuated. This is advantageous because it will minimise or prevent the transmission of shock impulses through the structural element and minimise or prevent banging noises associated with those shock impulses.

The absorption or attenuation of the shock impulse is the result of elastic compression of the damper material. That compression absorbs the energy from the shock impulse generated by the impact that gave rise to the shock impulse. In an embodiment of any of the above embodiments, the damper is so configured that the damper material is sufficiently dimensioned that the expected shock impulses will not damage the damper, and the dimensions of the damper are such that the damper will not reach it's maximum linier elastic deformation under compression when subject to the maximum anticipated shock impulses. This will prevent the damper being damaged or being so compressed that the damper ceases to prevent or minimise the transmission of shock impulses through the damper.

In an embodiment of any of the above embodiments, the damper has first and second end faces, the first end face is adapted to support or incorporate the at least one magnetic element, and the second end face is adapted to abut the structure to which the first retainer part is attached, and the first and second end faces are parallel or approximately parallel.

In an embodiment of any of the above embodiments, the damper has first and second end faces, the first end face is adapted to support or incorporate the at least one magnetic element, and the second end face is adapted to abut the structure to which the first retainer part is attached, and the first and second end faces are not approximately parallel. In some embodiments, the first and second end faces are so oriented relative to each other that when the second end face is abutting the structure, the first end face is parallel to the face of the second retainer part when the first and second retainer parts are in use and in contact with each other. In an embodiment of the above embodiment, at least one of the magnetic elements is one of a permanent magnet, a neodymium magnet and a samarium-cobalt magnet.

In an embodiment of any of the above embodiments, at least one magnetic element is formed from a ferromagnetic material.

In an embodiment of any of the above embodiments, the first retainer part further comprises a layer of a damping material that overlies the one or more magnetic elements, and that damping material damps shock impulses.

In an embodiment of any of the above embodiments, the damper and the layer of damping material that overlies the one or more magnetic elements have the same composition, are integral with each other, and are moulded around the one or more magnetic elements.

In an embodiment of any of the above embodiments, the damper and the layer of damping material that overlies the one or more magnetic elements are fixed together using an adhesive or a solvent welding technique.

In an embodiment of any of the above embodiments, at least one of the magnetic catch elements is one of a permanent magnet, a neodymium magnet and a samarium-cobalt magnet.

In an embodiment of any of the above embodiments, at least one of the magnetic catch elements is a formed from a ferromagnetic material.

In an embodiment of any of the above embodiments, the layer of a damping material fully surrounds the one or more magnetic catch elements, and that damping material damps shock impulses.

Embodiments where one or both of the magnetic elements and the magnetic catch elements are overlaid with a layer of damping material are advantageous because the overlying layer or layers will prevent any impacts between the magnetic elements / magnetic catch elements. This will lessen the risk of the magnetic elements / magnetic catch elements suffering damage from such impacts and / or minimise the generation of noise from such impacts. The risk of damage is particularly relevant where one or both of the magnetic elements and the magnetic catch elements is comprised of a neodymium or samarium-cobalt magnet because such magnets may be brittle.

In an embodiment of any of the above embodiments, the damping material of one or more of the damper, the layer which overlies the one or more magnetic elements, and the layer which overlies the one or more magnetic catch elements comprises an elastomer.

In an embodiment of any of the above embodiments, the elastomer comprises one of a natural rubber, a synthetic rubber, and a silicone rubber.

In an embodiment of any of the above embodiments, the first retainer part further comprises a mounting element suitable for mounting the retainer to a fixed structural element or a mobile structural element.

In an embodiment of any of the above embodiments, the fixed structural element is a bulkhead, and the mobile structural element is a door, step or set of steps.

In an embodiment of any of the above embodiments, the first and second retainer parts are so configured that when the magnetic elements and the magnetic catch elements at least partially overlie each other, the magnetic elements and the magnetic catch elements are magnetically attracted to each other.

According to a second aspect of the present disclosure there is provided an aircraft comprising a mobile structure, a fixed structure, and at least one retainer according to the first aspect of the present disclosure. The first retainer part is attached to one of a fixed structure and a moving structure, and the second retainer part is attached to the other of the fixed structure and the mobile structure. The first and second retainer parts are so located that they abut each other when the mobile structure is moved to a position next to the fixed structure.

The present invention will be further described and explained by way of example with reference to the accompanying drawings in which
Figure 1 shows a schematic embodiment of an aircraft which includes at least two retainers according to the present disclosure;
Figure 2 shows a schematic detail of part of a bulkhead, floor and step in the aircraft of Figure 1 when the step is in an open position;
Figure 3 shows a schematic sectional view of part of a bulkhead, floor, and step of Figure 2 when the step is in a closed position;
Figure 4 shows a schematic and perspective view of an embodiment of a first part of a retainer according to the present disclosure;
Figure 5 shows a schematic sectional view of the first part of the retainer of Figure 4;
Figure 6 shows a schematic and perspective view of an embodiment of a second part of a retainer according to the present disclosure; and
Figure 7 shows a schematic sectional view of the second part of the retainer of Figure 6.

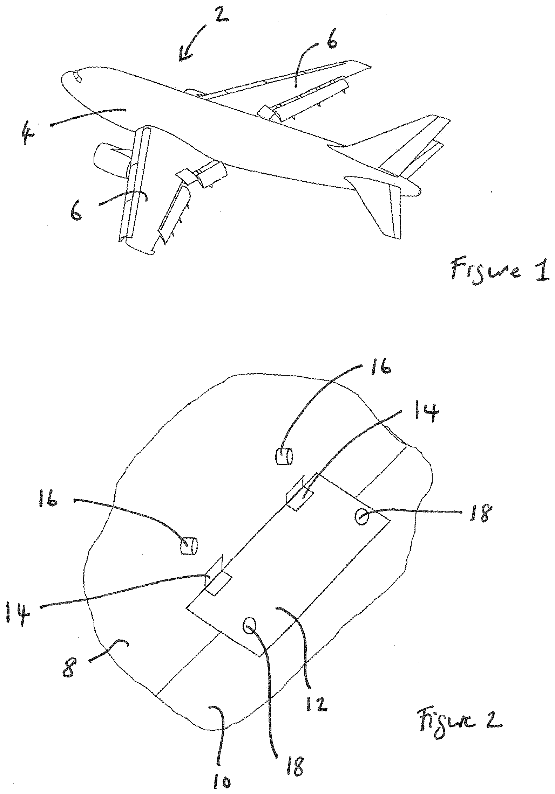

With reference to Figure 1, an aircraft 2 comprises a body 4 and first and second wings 6.

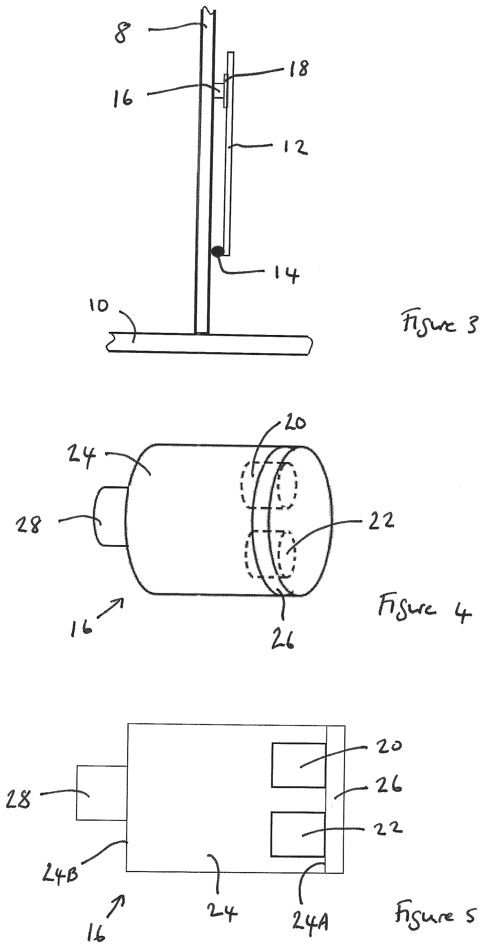

With reference to Figures 2 and 3, within the body 4 of the aircraft 2 is a bulkhead 8 extending upwardly from a floor 10. A step 12 is attached to the bulkhead 8 by a pair of hinges 14. The hinges 14 are so configured that the step 12 can be moved between an open or deployed position in which the step 12 extends in a direction substantially parallel to the floor 10 (as shown in Figure 2), and a closed or stowed position in which the step 12 is parallel or approximately parallel to the bulkhead 8 (as shown in Figure 3).

Attached to the bulkhead 8 are two first retainer parts 16. Attached to the step 12 are two second retainer parts 18. The first and second retainer parts 16, 18 are respectively so located on the wall 8 and step 12 that when the step 12 is in the closed or stowed position each first retainer part 16 is in contact with a second retainer part 18.

With reference to Figures 4 and 5, each first retainer part 16 is comprised of a damper 24 which has a first end 24A and a second end 24B. Set into the first end 24A of the damper 24 are first and second magnetic elements 20, 22. The first and second magnetic elements 20, 22 are, in the illustrated example, permanent magnets, for example neodymium magnets or samarium-cobalt magnets.

The first and second magnetic elements 20, 22 are cylindrical with the longitudinal axis of each cylinder extending in a direction approximately perpendicular to the first end face 24A of the damper 24. The first and second permanent magnets 20, 22 are so configured that their poles at the axial ends of the magnets.

The first and second end faces 24A, 24B of the damper 24 are, in the illustrated embodiment, approximately parallel to each other. In other, non-illustrated embodiments the first and second end faces are not approximately parallel. In some embodiments, the first and second end faces are so oriented relative to each other that when the second end face is flat against the bulkhead, the first end face is parallel to the face of the step or the face of the second retainer part attached to the step when the step is in the closed position.

The damper 24 is formed from an elastomeric material, for example a silicone rubber.

The damper 24 is so configured that the distance between the first and second magnetic elements 20, 22 and the second end face 24B of the damper 24 is such that the expected maximum shock impulse from any impact experienced by the damper 24 will not damage the damper 24, and the damper will not reach its maximum linier elastic deformation under compression when subject to the maximum anticipated shock impulse.

Overlying the first end surface 24A of the damper 24 and the first and second magnetic elements 20, 22 is a layer 26 of damping material.

Extending from the second end 24B of the damper 24 is a mounting element 28. The mounting element 28 is partially embedded within the damper 24 and is thus attached to the damper 24. In some non-illustrated embodiments the mounting element 28 is integral with the damper 24. In other non-illustrated embodiments, the mounting element 28 is attached to the damper 24 by other known methods, for example by an adhesive or a mechanical fixing means.

The mounting element 28 is adapted to engage with the bulkhead 8, and the bulkhead 8 adapted to engage with the mounting element 28. For example, the bulkhead 8 may define an internally threaded bore, the mounting element 28 has the form of an externally threaded bar, and the internal and external threads are adapted to engage with each other.

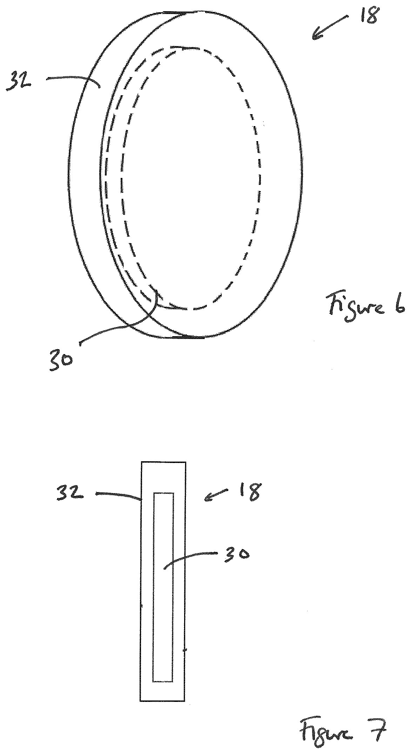

With reference to Figures 6 and 7, the second retainer element 18 is formed from a magnetic catch element 30 which is surrounded by a layer of damping material 32. The magnetic catch element 30 is formed from a material which is a ferromagnetic material, for example iron or a carbon steel. Each second retainer element 18 is attached to the step 12 using an adhesive (not shown).

In some non-illustrated examples of the present disclosure each first latch element comprises one or at least three magnetic elements.

In some non-illustrated examples of the present disclosure each second latch element comprises a plurality of magnetic catch elements.

In some non-illustrated examples of the present disclosure each of the or each magnetic element in the first retainer element is a permanent magnet for example a neodymium magnet or a samarium-cobalt magnet, and the or each magnetic catch element in the second retainer element is a permanent magnet, for example a neodymium magnet or a samarium-cobalt magnet. In such examples the or each magnetic element and the or each magnetic catch element are so orientated that the or each magnetic element and the or each magnetic catch element are magnetically attracted to each other.

In some non-illustrated examples of the present disclosure the or each magnetic element in the first retainer element is formed from a ferromagnetic material, for example iron or a carbon steel, and the or each magnetic catch element in the second retainer element is a permanent magnet, for example a neodymium magnet or a samarium-cobalt magnet.

The above description is meant to be exemplary only, and one skilled in the art will recognize that changes may be made to the embodiments described without departing from the scope of the disclosure. Still other modifications which fall within the scope of the present disclosure will be apparent to those skilled in the art, in light of a review of this disclosure.

This disclosure is therefore not limited in its application to the details and arrangement of components set forth in the foregoing description or illustrated in the drawings. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A retainer (16, 18) suitable for use on an aircraft (2), the retainer comprising
a first retainer part (16) and a second retainer part (18);
the first retainer part comprises a catch and a damper (24); in which the catch comprises one or more magnetic elements (20, 22);
the damper comprises a damping material, the damping material damps shock impulses; and
the catch is supported on the damper;
the second retainer part comprises a catch plate; in which
the catch plate comprises at least one magnetic catch element (30); and
wherein the second retainer part further comprises a layer of a damping material (32) that overlies at least part of the at least one magnetic catch element, and wherein said damping material damps shock impulses.

2. A retainer (16, 18) according to claim 1 in which at least one of the magnetic elements (20, 22) is one of a permanent magnet, a neodymium magnet and a samarium-cobalt magnet.

3. A retainer (16, 18) according to claims 1 or 2 in which at least one magnetic element (20, 22) is formed from a ferromagnetic material.

4. A retainer (16, 18) according to any of claims 1 to 3 in which the first retainer part (16) further comprises a layer of a damping material (26) that overlies the one or more magnetic elements (20, 22), and that damping material damps shock impulses.

5. A retainer (16, 18) according to any preceding claim in which at least one of the magnetic catch elements (30) is one of a permanent magnet, a neodymium magnet and a samarium-cobalt magnet.

6. A retainer (16, 18) according to any preceding claim in which at least one of the magnetic catch elements (30) is a formed from a ferromagnetic material.

7. A retainer (16, 18) according to any of claims 1 to 6 in which the damping material of one or more of the damper (24), the layer (26) which overlies the one or more magnetic elements (20, 22), and the layer (32) which overlies the one or more magnetic catch elements (30) comprises an elastomer.

8. A retainer (16, 18) according to claim 7 in which the elastomer comprises one of a natural rubber, a synthetic rubber, and a silicone rubber.

9. A retainer (16, 18) according to any of claims 1 to 8 in which the first and second retainer parts (16, 18) are so configured that, the magnetic elements (20, 22) and the magnetic catch elements (30) are magnetically attracted to each other when the retainer is in use and the magnetic elements and the magnetic catch elements at least partially overlie each other.

10. A retainer (16, 18) according to any of claims 1 to 9 in which the damper (24) comprises first and second end faces (24A, 24B); the first end face (24A) is adapted to support or incorporate the at least one magnetic element (20, 22), and the second end face (24B) is adapted to abut a structure (8) to which the first retainer part (16) is attached; the first and second end faces are so oriented relative to each other that when the second end face is abutting the structure, the first end face may be orientated so that it is parallel to the face of the second retainer part (18) when the first and second retainer parts (16, 18) are in use and in contact with each other.

11. A retainer (16, 18) according to any of claims 1 to 10 in which the damper (24) is so configured that the damper material is sufficiently dimensioned that the expected maximum shock impulses will not damage the damper, and the damper will not reach its maximum linier elastic deformation under compression when subject to the maximum anticipated shock impulses.

12. An aircraft (2) comprising a mobile structure (12), a fixed structure (8), and at least one retainer (16, 18) according to any of claims 1 to 11 in which the first retainer part (16) is attached to one of a fixed structure and a moving structure;
the second retainer part (18) is attached to the other of the fixed structure and the moving structure; and
the first and second retainer parts are so located that they abut each other when the moving structure is moved to a position next to the fixed structure.

13. An aircraft (2) according to claim 12 in which the moving structure (12) is one of a door or a step.

## Patentansprüche

1. Halter (16, 18), geeignet zur Verwendung an einem Luftfahrzeug (2), wobei der Halter ein erstes Halteteil (16) und ein zweites Halteteil (18) umfasst;
das erste Halteteil umfasst eine Aufnahme und einen Dämpfer (24); wobei
die Aufnahme ein oder mehrere Magnetelemente (20, 22) umfasst; der Dämpfer ein Dämpfungsmaterial umfasst, wobei das Dämpfungsmaterial Stoßimpulse dämpft; und
die Aufnahme auf dem Dämpfer getragen ist;
das zweite Halteteil umfasst eine Aufnahmeplatte; wobei
die Aufnahmeplatte mindestens ein Magnetfangelement (30) umfasst; und
wobei das zweite Halteteil ferner eine Schicht eines Dämpfungsmaterials (32) umfasst, die mindestens einen Teil des mindestens einen Magnetfangelements überdeckt, und wobei das Dämpfungsmaterial Stoßimpulse dämpft.

2. Halter (16, 18) nach Anspruch 1, wobei mindestens eines von den Magnetelementen (20, 22) eines von einem Permanentmagneten, einem Neodymmagneten und einem Samarium-Kobalt-Magneten ist.

3. Halter (16, 18) nach Anspruch 1 oder 2, wobei mindestens ein Magnetelement (20, 22) gebildet aus einem ferromagnetischen Material ist.

4. Halter (16, 18) nach einem der Ansprüche 1 bis 3, wobei das erste Halteteil (16) ferner eine Schicht eines Dämpfungsmaterials (26) umfasst, die das eine oder die mehreren Magnetelemente (20, 22) überdeckt, und wobei das Dämpfungsmaterial Stoßimpulse dämpft.

5. Halter (16, 18) nach einem der vorhergehenden Ansprüche, wobei mindestens eines von den Magnetfangelementen (30) eines von einem Permanentmagneten, einem Neodymmagneten und einem Samarium-Kobalt-Magneten ist.

6. Halter (16, 18) nach einem der vorhergehenden Ansprüche, wobei mindestens eines von den Magnetfangelementen (30) ein gebildet aus einem ferromagnetischen Material ist.

7. Halter (16, 18) nach einem der Ansprüche 1 bis 6, wobei das Dämpfungsmaterial von einem oder mehreren von dem Dämpfer (24), der Schicht (26), die das eine oder die mehreren Magnetelemente (20, 22) überdeckt, und der Schicht (32), die das eine oder die mehreren Magnetfangelemente (30) überdeckt, ein Elastomer umfasst.

8. Halter (16, 18) nach Anspruch 7, wobei das Elastomer eines von einem Naturkautschuk, einem Synthesekautschuk und einem Silikonkautschuk umfasst.

9. Halter (16, 18) nach einem der Ansprüche 1 bis 8, wobei das erste und das zweite Halteteil (16, 18) so ausgelegt sind, dass die Magnetelemente (20, 22) und die Magnetfangelemente (30) magnetisch zueinander angezogen sind, wenn der Halter in Gebrauch ist und die Magnetelemente und die Magnetfangelemente einander mindestens teilweise überdecken.

10. Halter (16, 18) nach einem der Ansprüche 1 bis 9, wobei der Dämpfer (24) eine erste und eine zweite Endfläche (24A, 24B) umfasst; die erste Endfläche (24A) eingerichtet zu Tragen oder Aufnehmen des mindestens einen Magnetelements (20, 22) ist, und die zweite Endfläche (24B) eingerichtet zu Anliegen an einer Struktur (8) ist, an der das erste Halteteil (16) befestigt ist; die erste und die zweite Endfläche so relativ zueinander ausgerichtet sind, dass, wenn die zweite Endfläche an der Struktur anliegt, die erste Endfläche so ausgerichtet sein kann, dass sie parallel zu der Fläche des zweiten Halteteils (18) ist, wenn das erste und das zweite Halteteil (16, 18) in Gebrauch und in Kontakt miteinander sind.

11. Halter (16, 18) nach einem der Ansprüche 1 bis 10, wobei der Dämpfer (24) so ausgelegt ist, dass das Dämpfermaterial ausreichend dimensioniert ist, dass die erwarteten maximalen Stoßimpulse den Dämpfer nicht beschädigen werden, und der Dämpfer seine maximale lineare elastische Verformung unter Kompression nicht erreichen wird, wenn er den maximal erwarteten Stoßimpulsen ausgesetzt ist.

12. Luftfahrzeug (2), umfassend eine mobile Struktur (12), eine feste Struktur (8) und mindestens einen Halter (16, 18) nach einem der Ansprüche 1 bis 11, wobei das erste Halteteil (16) an einer von einer festen Struktur und einer beweglichen Struktur befestigt ist; das zweite Halteteil (18) an der anderen von der festen Struktur und der beweglichen Struktur befestigt ist; und das erste und das zweite Halteteil sich so befinden, dass sie aneinander anliegen, wenn die bewegliche Struktur in eine Position neben der festen Struktur bewegt wird.

13. Luftfahrzeug (2) nach Anspruch 12, wobei die bewegliche Struktur (12) eines von einer Tür oder einer Stufe ist.

## Revendications

1. Dispositif de retenue (16, 18) adapté à une utilisation sur un aéronef (2), le dispositif de retenue comprenant une première partie de dispositif de retenue (16) et une deuxième partie de dispositif de retenue (18) ;
la première partie de dispositif de retenue comprend un loquet et un amortisseur (24) ; dans laquelle
le loquet comprend un ou plusieurs éléments magnétiques (20, 22) ;
l'amortisseur comprend un matériau amortissant, ce matériau amortissant des impulsions de choc ; et
le loquet est soutenu par l'amortisseur ;
la deuxième partie de dispositif de retenue comprend une plaque de retenue ; dans laquelle
la plaque de retenue comprend au moins un élément de retenue magnétique (30) ; et
dans lequel la deuxième partie de dispositif de retenue comprend en outre une couche d'un matériau amortissant (32) qui recouvre au moins une partie du ou des éléments de retenue magnétique, et dans lequel ledit matériau amortit les impulsions de choc.

2. Dispositif de retenue (16, 18) selon la revendication 1 dans lequel au moins un des éléments magnétiques (20, 22) est un parmi un aimant permanent, un aimant en néodyme et un aimant en samarium-cobalt.

3. Dispositif de retenue (16, 18) selon les revendications 1 ou 2 dans lequel au moins un élément magnétique (20, 22) est formé à partir d'un matériau ferromagnétique.

4. Dispositif de retenue (16, 18) selon l'une quelconque des revendications 1 à 3 dans lequel la première partie de dispositif de retenue (16) comprend en outre une couche d'un matériau amortissant (26) qui recouvre le ou les éléments magnétiques (20, 22), et ce matériau amortit les impulsions de choc.

5. Dispositif de retenue (16, 18) selon l'une quelconque des revendications précédentes dans lequel au moins un des éléments de retenue magnétiques (30) est un parmi un aimant permanent, un aimant en néodyme et un aimant en samarium-cobalt.

6. Dispositif de retenue (16, 18) selon l'une quelconque des revendications précédentes dans lequel au moins un des éléments de retenue magnétiques (30) est formé à partir d'un matériau ferromagnétique.

7. Dispositif de retenue (16, 18) selon l'une quelconque des revendications 1 à 6 dans lequel le matériau amortissant d'un ou plusieurs des amortisseurs (24), la couche (26) qui recouvre le ou les éléments magnétiques (20, 22) et la couche (32) qui recouvre le ou les éléments de retenue magnétiques (30) comprend un élastomère.

8. Dispositif de retenue (16, 18) selon la revendication 7 dans lequel l'élastomère comprend un élément parmi un caoutchouc naturel, un caoutchouc synthétique et un caoutchouc de silicone.

9. Dispositif de retenue (16, 18) selon l'une quelconque des revendications 1 à 8 dans lequel les première et deuxième parties de dispositif de retenue (16, 18) sont configurées de telle sorte que les éléments magnétiques (20, 22) et les éléments de retenue magnétiques (30) s'attirent magnétiquement l'un l'autre lorsque le dispositif de retenue est utilisé et que les éléments magnétiques et les éléments de retenue magnétiques se chevauchent au moins partiellement.

10. Dispositif de retenue (16, 18) selon l'une quelconque des revendications 1 à 9 dans lequel l'amortisseur (24) comprend des première et deuxième faces d'extrémité (24A, 24B) ; la première face d'extrémité (24A) est adaptée pour supporter ou incorporer le ou les éléments magnétiques (20, 22), et la deuxième face d'extrémité (24B) est adaptée pour venir en butée contre une structure (8) à laquelle la première partie de dispositif de retenue (16) est fixée ; les première et deuxième faces d'extrémité sont orientées l'une par rapport à l'autre de manière que lorsque la deuxième face d'extrémité est en butée contre la structure, la première face d'extrémité peut être orientée de manière à être parallèle à la face de la deuxième partie de dispositif de retenue (18) lorsque les première et deuxième parties de dispositif de retenue (16, 18) sont utilisées et en contact l'une avec l'autre.

11. Dispositif de retenue (16, 18) selon l'une quelconque des revendications 1 à 10 dans lequel l'amortisseur (24) est configuré de telle sorte que le matériau amortissant soit suffisamment dimensionné pour que les impulsions de choc maximales attendues n'endommagent pas l'amortisseur et que l'amortisseur n'atteigne pas sa déformation élastique linéaire maximale sous compression lorsqu'il est soumis aux impulsions de choc maximales prévues.

12. Aéronef (2) comprenant une structure mobile (12), une structure fixe (8) et au moins un dispositif de retenue (16, 18) selon l'une quelconque des revendications 1 à 11, dans lequel la première partie de dispositif de retenue (16) est fixée à l'une parmi une structure fixe et une structure mobile ; la deuxième partie de dispositif de retenue (18) est fixée à l'autre parmi la structure fixe et la structure mobile ; et
les première et deuxième parties de dispositif de retenue sont positionnées de telle sorte qu'elles viennent en butée l'une contre l'autre lorsque la structure mobile est déplacée dans une position à côté de la structure fixe.

13. Aéronef (2) selon la revendication 12 dans lequel la structure mobile (12) est une parmi une porte et une marche.
